# EUROPEAN PATENT APPLICATION

(11) **EP 2 560 397 A2**
(43) Date of publication of application: **20.02.2013**
(21) Application number: 11769068.5
(22) Date of filing: 13.04.2011
(51) Int. Cl.: H04N 13/00, H04N 7/24

(54) **THREE-DIMENSIONAL IMAGE DATA ENCODING METHOD AND DEVICE AND DECODING METHOD AND DEVICE**

(30) Priority: 12.04.2011 KR 20110033772; 14.04.2010 US 324023 P
(71) Applicant: Samsung Electronics Co., Ltd, Gyeonggi-do 443-742 (KR)
(72) Inventor: PARK, Hong-Seok, Anyang-si, Gyeonggi-do 431-050 (KR); LEE, Jae-Jun, Suwon-si, Gyeonggi-do 443-773 (KR); KIM, Yong-Tae, Seoul 137-062 (KR); LEE, Dae-Jong, Suwon-si, Gyeonggi-do 443-717 (KR)
(74) Representative: Clark, David James
(86) International application number: PCT/KR2011/002602
(87) International publication number: WO 2011/129602

(57) **Abstract**

A method and apparatus for encoding three-dimensional (3D) image data and a method and apparatus for decoding 3D image data. The method of encoding 3D image data by using a data unit that includes a header area and a data area, wherein type information indicating a type of data included in the data area is included in the header area, includes: encoding reference view image data and additional view image data for providing a 3D image; generating a first data unit by adding to the reference view image data a header including first unit type information from among pieces of type information defined in a legacy device; and generates a second data unit by adding to the additional view image data a header including second unit type information from among pieces of type information not defined in the legacy device.

## Description

### TECHNICAL FIELD

The present invention relates to a method and apparatus for providing a three-dimensional (3D) image, and more particularly, to a method and apparatus for encoding data and a method and apparatus for decoding data, which allocate different values to type information about reference view image data and type information about additional view image data.

### BACKGROUND ART

A digital broadcast receiver synchronizes a physical frequency of a desired channel by using a tuner based on a user's input and selectively extracts only a signal of the physical frequency. The digital broadcast receiver obtains a transport stream from the extracted signal by using a channel decoding unit and an inverse modulation unit, and then processes and finally outputs the transport stream.

The digital broadcast receiver detects a program ID (PID) of a desired packet by referring to a stream type defined in a program mapping table (PMT) and selectively processes the desired packet. In particular, in order to provide a stereoscopic image, the digital broadcast receiver may selectively obtain image data for the stereoscopic image by defining a PID indicating reference view image data and a PID indicating additional view image data in the PMT.

Accordingly, when a stereoscopic image is provided, the digital broadcast receiver has to obtain PMT section data in addition to a transmission packet in which image data is contained, and it is difficult for the digital broadcast receiver to provide the stereoscopic image through a system other than a moving picture experts group (MPEG)-2 transmission system.

### DETAILED DESCRIPTION OF THE INVENTION

The present invention provides a method and apparatus for encoding three-dimensional (3D) image data and a method and apparatus for decoding 3D image data, by using a data unit in which type information is included.

### DESCRIPTION OF THE DRAWINGS

FIG. 1 is a block diagram illustrating an apparatus for encoding data, according to an embodiment of the present invention.
FIG. 2 is a diagram illustrating a hierarchical structure for generating a H.264/AVC stream, according to an embodiment of the present invention.
FIG. 3 is a diagram illustrating a network abstraction layer (NAL) unit according to an embodiment of the present invention.
FIG. 4 is a diagram illustrating a type of data according to a value of nal_unit_type.
FIG. 5 is a diagram illustrating a header of a first NAL unit including reference view image data and a header of a second NAL unit including additional view image data, according to an embodiment of the present invention.
FIG. 6 is a diagram illustrating a H.264 NAL unit sequence according to an embodiment of the present invention.
FIG. 7 is a diagram illustrating a H.264 NAL unit sequence according to another embodiment of the present invention.
FIG. 8 is a diagram illustrating signaling information according to an embodiment of the present invention.
FIG. 9 is a diagram illustrating signaling information according to another embodiment of the present invention.
FIG. 10 is a diagram illustrating signaling information according to another embodiment of the present invention.
FIG. 11A is a diagram illustrating a structure of depth_params of FIG. 10.
FIG. 11B is a diagram illustrating a structure of parallel_params of FIG. 10;
FIG. 11C is a diagram illustrating a structure of additional_view_params of FIG. 10;
FIG. 12 is a diagram illustrating signaling information according to another embodiment of the present invention;
FIG. 13 is a diagram illustrating a H.264 NAL sequence in which signaling information is included, according to an embodiment of the present invention.
FIG. 14 is a diagram illustrating a H.264 NAL sequence in which signaling information is included, according to another embodiment of the present invention.
FIG. 15 is a block diagram illustrating an apparatus for decoding data, according to an embodiment of the present invention.
FIG. 16 is a diagram illustrating processes of processing data in a data decoding device and a legacy device, according to an embodiment of the present invention.
FIG. 17 is a flowchart illustrating a method of encoding data, according to an embodiment of the present invention.
FIG. 18 is a flowchart illustrating a method of decoding data, according to an embodiment of the present invention.

### BEST MODE

According to an aspect of the present invention, there is provided a method of encoding three-dimensional (3D) image data by using a data unit that includes a header area and a data area, wherein type information indicating a type of data included in the data area is included in the header area, the method including: encoding reference view image data and additional view image data for providing a 3D image; generating a first data unit by adding to the reference view image data a header including first unit type information from among pieces of type information defined in a legacy device; and generating a second data unit by adding to the additional view image data a header including second unit type information from among pieces of type information not defined in the legacy device.

The method may further include: changing the first data unit and the second data unit based on a transmission system; and transmitting the first data unit and the second data unit.

The encoding may include: encoding next reference view image data by referring to only previous reference view image data; and encoding next additional view image data by referring to only previous additional view image data.

Each of the first data unit and the second data unit may include a network abstraction layer (NAL) unit according to H.264.

The method may further include generating signaling information in which pairing information indicating that the reference view image data included in the first data unit and the additional view image data included in the second data unit are one pair of image data is included, wherein the transmitting includes transmitting the first data unit, the second data unit, and the signaling information.

The signaling information may include information indicating that type information of the second data unit including the additional view image data is the second unit type information.

The signaling information may include preceding view information indicating image data to be first output from among the reference view image data and the additional view image data, multiplex information indicating a multiplexing method of the reference view image data and the additional view image data, and composition ratio information indicating a composition ratio of the reference view image data and the additional view image data.

The transmitting may include transmitting the first data unit and the second data unit through a moving picture experts group-2 (MPEG-2) transmission system, wherein the signaling information is included in a predetermined area in a program mapping table (PMT).

According to another aspect of the present invention, there is provided a method of encoding three-dimensional (3D) image data by using a data unit that includes a header area and a data area, wherein type information indicating a type of data included in the data area is included in the header area, the method including: encoding at least one of reference view image data and additional view image data for providing a 3D image; generating a first data unit by adding to the reference view image data a header in which first unit type information indicating that main image data exists in the data area is included; and generating a second data unit by adding to information about the additional view image data a header in which second unit type information indicating that sub-image data exists in the data area is included.

The information about the additional view image data may be one of depth map information indicating a distance between a reference position and an object, binocular disparity information regarding binocular disparity between a left eye and a right eye, and the additional view image data.

According to another aspect of the present invention, there is provided a method of decoding three-dimensional (3D) image data in a decoding device by using a data unit that includes a header area and a data area, wherein type information indicating a type of data included in the data area is included in the header area, the method including: based on first unit type information from among pieces of type information defined in a legacy device, obtaining a first data unit that includes reference view image data and a header including the first unit type information; based on a second unit type information from among pieces of type information not defined in the legacy device, obtaining a second data unit that includes additional view image data and a header including the second unit type information; and decoding at least one of the first data unit and the second data unit.

According to another aspect of the present invention, there is provided a method of decoding three-dimensional (3D) image data by using a data unit that includes a header area and a data area, wherein type information indicating a type of data included in the data area is included in the header area, the method including: based on first unit type information indicating that data included in the data area in the data unit is main image data, obtaining a first data unit that includes reference view image data and a header including the first unit type information; based on second unit type information indicating that data included in the data area in the data unit is sub-image data, generating a second data unit that includes additional view image data and a header including the second unit type information; and decoding the first data unit and the second data unit.

### MODE OF THE INVENTION

The present invention will now be described more fully with reference to the accompanying drawings, in which exemplary embodiments of the invention are shown.

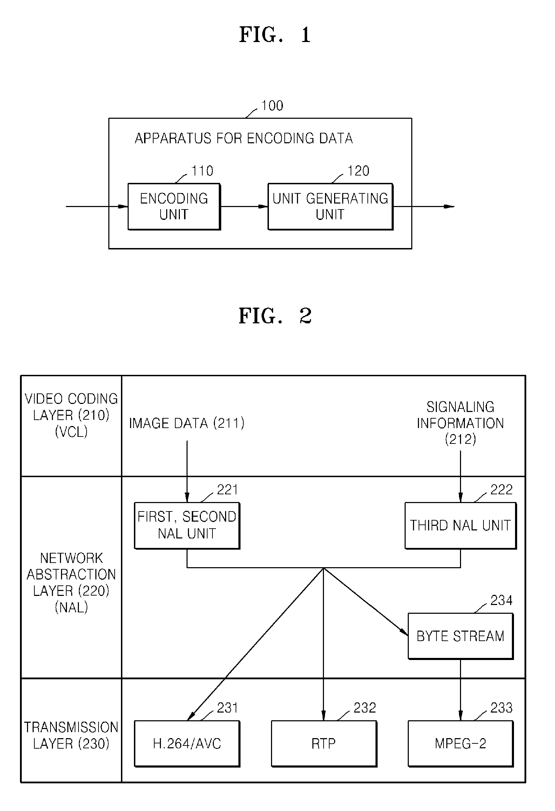

FIG. 1 is a block diagram illustrating an apparatus 100 for encoding data, according to an embodiment of the present invention.

Referring to FIG. 1, the apparatus 100 includes an encoding unit 110 and a unit generating unit 120. The apparatus 100 encodes three-dimensional (3D) image data for providing a 3D image. It is assumed that in order to provide a stereoscopic image to a user, the apparatus 100 encodes reference view image data and additional view image data. However, if necessary, the apparatus 100 may encode three or more pieces of view image data.

The encoding unit 110 encodes the reference view image data and the additional view image data for providing a 3D image. The encoding unit 110 may encode image data in various ways. For example, the encoding unit 110 may encode image data according to H.264/AVC.

The encoding unit 110 encodes the reference view image data and the additional view image data such that the reference view image data and the additional view image data maintain an independent reference relationship therebetween. When the reference view image data and the additional view image data maintain an independent reference relationship therebetween, it means that when the reference view image data is encoded or decoded, the reference view image data is referred to (that is, the additional view image data is not referred to), and when the additional view image data is encoded or decoded, the additional view image data is referred to (that is, the reference view image data is not referred to).

In order to reduce the amount of data used to encode image data, from among the entire image data, some image data is encoded without referring to other image data, and remaining image data is encoded by referring to previous or next one or more pieces of image data.

It is assumed that reference image data encoded without referring to other image data exists only in the reference view image data. In this case, since one or more pieces of the additional view image data have to refer to the reference view image data, in order to decode the additional view image data, one or more pieces of image data in the reference view image data should be first decoded. Likewise, the reference view image data may refer to the additional view image data. Accordingly, an apparatus for decoding data may not independently process only the additional view image data or the reference view image data.

However, in the present embodiment, since the reference view image data and the additional view image data are encoded such that the reference view image data and the additional view image data maintain an independent reference relationship there between, an apparatus for decoding data may process only the additional view image data without needing to process the reference view image data, or may process only the reference view image data without needing to process the additional view image data.

The unit generating unit 120 generates data units by adding headers to the encoded reference view image data and the encoded additional view image data. The unit generating unit 120 generates a data unit that includes a data area and a header area. The data unit generated by the unit generating unit 120 is independent of a transmission system. That is, a data unit may be transmitted through any of various transmission systems, for example, H.264/AVC, RTP, and MPEG-2. In order to maintain an independent relationship between a data unit and a transmission system, a type of data included in the data area needs to be detected without using signalling information such as a program mapping table (PMT). Accordingly, the unit generating unit 120 allows information indicating a type of data included in the data area to be included in the header area. For convenience of explanation, information indicating a type of data is referred to as unit type information.

The unit generating unit 120 allocates different values to unit type information indicating the reference view image data and unit type information indicating the additional view image data. The unit generating unit 120 may allocate unit type information by using two methods, but the present embodiment is not limited thereto.

In one method, the unit generating unit 120 determines unit type information indicating the reference view image data as first unit type information from among pieces of type information defined in a legacy device, and determines unit type information indicating the additional view image data as second unit type information from among pieces of type information not defined in the legacy device.

The legacy device may be a two-dimensional (2D) apparatus for encoding or decoding data which may not provide 3D image data. If necessary, broadly, the legacy device may be any of devices which may not identify unit type information indicating the additional view image data.

It is assumed that the unit generating unit 120 generates a data unit according to H.264/AVC. The unit generating unit 120 generates a network abstraction layer (NAL) unit that includes a header area and a data raw byte sequence payload (RBSP) area in which encoded data is included. The first unit type information from among pieces of type information defined in the legacy device is included in a header of a NAL unit in which the reference view image data is included and the second unit type information from among pieces of type information not defined in the legacy device is included in a header of a NAL unit in which the additional view image data is included.

In the other method, the unit generating unit 120 determines unit type information indicating the reference view image data as first unit type information corresponding to main image data, and determines unit type information indicating the additional view image data as second unit type information corresponding to sub-image data. The unit generating unit 120 generates a first data unit by adding, to a data unit in which the reference view image data is included, a header in which the first unit type information is included, and generates a second data unit by adding, to a data unit in which the additional view image data is included, a header in which the second unit type information is included.

The sub-image data is used to transmit information about a transparency in units of pixels when the main image data is displayed. The sub-image data includes the same number of macroblocks as that of the main image data. The sub-image data is continuously transmitted to the main image data if necessary, and even when the sub-image data is not transmitted, the main image data may be successfully decoded.

The sub-image data may be the additional view image data itself or may include information for restoring the additional view image data (for example, depth map information indicating a distance between a predetermined position and an object or binocular disparity information regarding binocular disparity between a left eye and a right eye seeing the object).

Since the sub-image data transmits only information about a transparency, the sub-image data is monochrome information. Since the depth information and the binocular disparity information are also monochrome information, the depth information and the binocular disparity information may be easily transmitted by using the sub-image data.

It is assumed that the unit generating unit 120 generates a NAL unit according to H.264. The unit generating uni120 may allocate 19 indicating the sub-image data to 'Nal_Unit_Type', and may generate a NAL unit in which the additional view image data is included by adding a header including 'Nal_Unit_Type=19' to the additional view image data.

The unit generating unit 120 may further generate a third data unit including signaling information. Pairing information indicating that the reference view image data included in the first data unit and the additional view image data included in the second data unit are one pair of image data is included in the signaling information. For example, the signaling information may include information indicating type information of the second data unit including the additional view image data, preceding view information indicating image data to be first output from among the reference view image data and the additional view image data, multiplex information indicating a multiplexing method of the reference view image data and the additional view image data, and composition ratio information indicating a composition ratio of the reference view image data and the additional view image data.

The apparatus 100 may further include a transmitting unit (not shown). The transmitting unit changes the first data unit, the second data unit, and the third data unit such that the first data unit, the second data unit, and the third data unit match a transmission system used by the apparatus 100, and contains the changed data units in a transmission container to be transmitted. For example, when a data unit is transmitted through an MPEG-2 transmission system, the transmitting unit adds a start code, such as a picture or a group of pictures (GOP), indicating the start of specific data to the data unit, adjusts a type of the data unit such that the type of the data unit matches the transmission system to obtain a result, and transmits the result. In this case, the transmitting unit may contain the signaling information in a table, such as a PMT, which is defined in the MPEG-2 transmission system to obtain a result and may transmit the result.

FIG. 2 is a diagram illustrating a hierarchical structure for generating a H.264/AVC stream, according to an embodiment of the present invention.

Referring to FIG. 2, the H.264/AVC stream is generated by passing through three layers, that is, a video coding layer (VCL) 210, a NAL 220, and a transmission layer 230.

The VCL 210 encodes image data. The VCL 210 encodes image data 211 such as the reference view image data and the additional view image data according to H.264. The VCL 210 may encode or may not encode signaling information 212 such as supplement enhancement information (SEI) or a parameter set such as a picture parameter set (PPS) or a sequence parameter set (SPS) according to various encoding methods.

The NAL 220 generates NAL units 221 and 222. Each of the NAL units 221 and 222 include a header and an RBSP. The RBSP in which data is included allows the image data 211 or the signaling data 212 encoded in the VCL 210 to be included therein. 'Nal_Unit_Type' indicating a type of data included in the RBSP is included in the header. When the reference view image data is included in the RBSP, the 'Nal_Unit_Type' may have one value from among pieces of type information defined in the legacy device, and when the additional view image data is included in the RBSP, the 'Nal_Unit_Type' may have one value from among pieces of type information not defined in the legacy device.

The NAL 220 may change the NAL units 221 and 222 such that the NAL units 221 and 222 match the transmission system. For example, when an MPEG-2 transmission system is used, the NAL 220 generates a transmission packet by adding to the NAL units 221 and 222 a byte stream 234 indicating the start of a picture or a GOP. If necessary, a process of changing the NAL units 221 and 222 such that the NAL units 221 and 222 match a transmission system to be used may be performed in the transmission layer 230.

The transmission layer 230 transmits the transmission packet. The transmission layer 230 may use at least one transmission system of H.264/AVC 231, RTP 232, and MPEG-2 233.

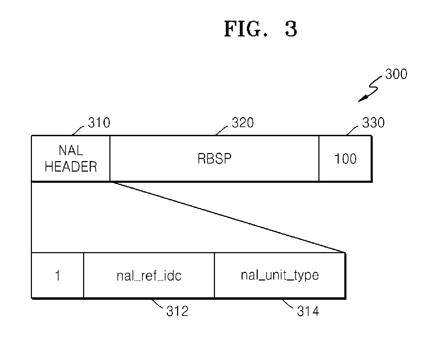

FIG. 3 is a diagram illustrating a NAL unit 300 according to an embodiment of the present invention.

The NAL unit 300 includes a NAL header 310 and an RBSP 320.

Data to be transmitted is included in the RBSP 320. For example, the reference view image data, the additional view image data, and the signaling information may be included in the RBSP 320.

For example, a padding bit 330 may be added to the RBSP 320.

The NAL header 310 includes nal_ref_idc 312 and nal_unit_type 314.

The nal_ref_idc 312 is information indicating whether data included in the RBSP 320 is used to restore reference image data.

The nal_unit_type 314 is information indicating a type of the data included in the RBSP 320.

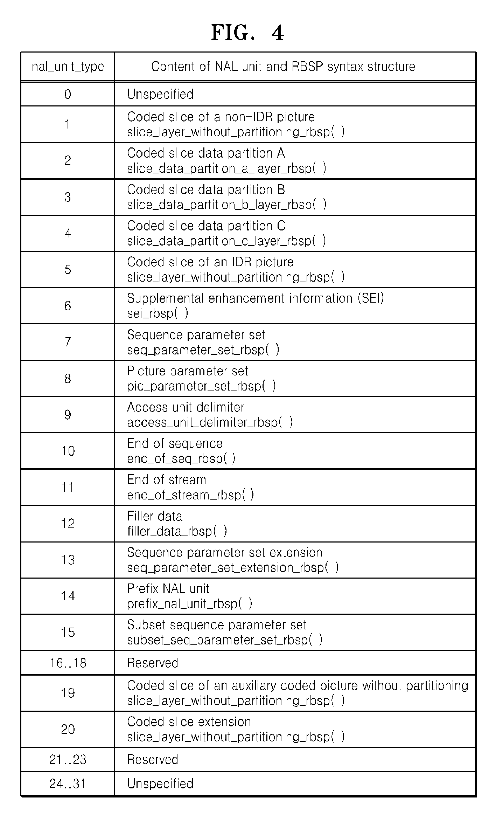

FIG. 4 is a diagram illustrating a type of data according to a value of the nal_unit_type 314.

Referring to FIG. 4, a case where the nal_unit_type 314 has a value of 16 to 18 and 21 to 23 is not specified in H.264.

The unit generating unit 120 sets the nal_unit_type 314 of a NAL unit including the reference view image data to a value, (e.g., 1 or 4), defined in the H.264, and sets the nal_unit_type 314 of a NAL unit including the additional view image data to a value (e.g., any of 16 to 18 or 21 to 23) not defined in the H.264.

A legacy device according to a corresponding standard (that is, a device in which a case where the nal_unit_type 314 has a value of 16 to 18 or 21 to 23 is not defined) determines a NAL unit including the additional view image data as a unit that may not be parsed and thus does not process the NAL unit.

However, an apparatus for decoding data according to an embodiment of the present invention (that is, an apparatus in which it is assumed that when the nal_unit_type 314 has a value of any of 16 to 18 or 21 to 23, the additional view image data is included) processes a NAL unit in which the additional view image data is included and provides a 3D image.

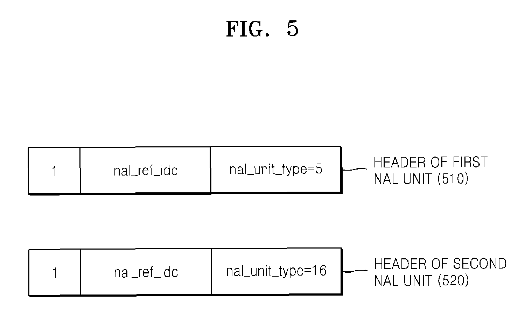

FIG. 5 is a diagram illustrating a header 510 of a first NAL unit including the reference view image data and a header 520 of a second NAL unit including the additional view image data, according to an embodiment of the present invention.

'nal_unit_type' in the header 510 of the first NAL unit has a value of 5, and indicates that the reference view image data corresponding to reference image data is included in an RBSP area of the first NAL unit.

'nal_unit_type' in the header 520 of the second NAL unit has a value of 16. In the current H.264, a case where a value of 'nal_unit_type' is 16 is set as reserved. That is, a case where a value of 'nal_unit_type' is 16 is not defined in an existing legacy device. This means that the additional view image data is included in an RBSP area of the second NAL unit.

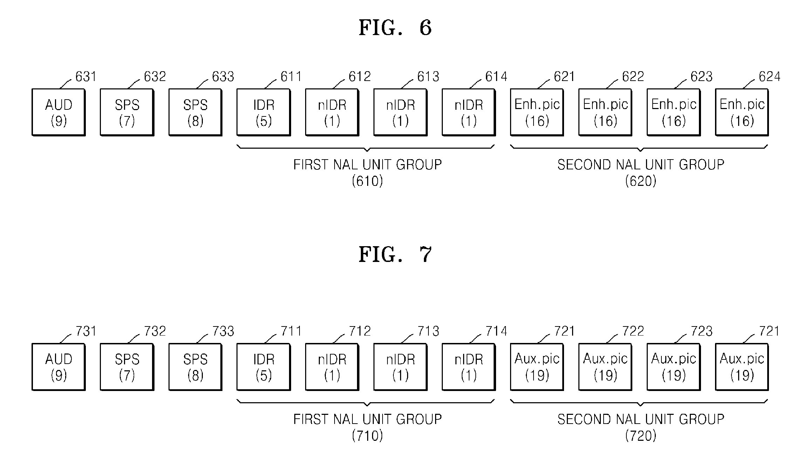

FIG. 6 is a diagram illustrating a H.264 NAL unit sequence according to an embodiment of the present invention.

In FIG. 6, it is assumed that the unit generating unit 120 uses one of unit type values defined in the legacy device as a unit type value indicating the reference view image data, and one of unit type values not defined in the legacy device as a unit type value indicating the additional view image data.

The H.264 NAL unit sequence includes a first NAL unit group 610 and a second NAL unit group 620, and a value of 'nal_unit_type' is shown with parentheses.

In NAL units 611, 612, 613, and 614 in the first NAL unit group 610, the 'nal_unit_type' has a value of 1 or 5.

Referring to FIG. 4, when 'nal_unit_type' has a value of 1, a NAL unit includes image data other than instantaneous decoding refresh (IDR) image data, and when 'nal_unit_type' has a value of 5, a NAL unit includes image data which is IDR image data. When the 'nal_unit_type' has a value of 1 or a value of 5, since 1 and 5 are unit type values defined in the legacy device, it is determined that the first NAL unit group 610 includes the reference view image data.

In NAL units 621, 622, 623, and 624 in the second NAL unit group 620, the 'nal_unit_type' has a value of 16.

Referring to FIG. 4, when 'nal_unit_type' has a value of 16, since 16 is a unit type value not defined in the legacy device, it is determined that the second NAL unit group 620 includes the additional view image data.

FIG. 7 is a diagram illustrating a H.264 NAL unit sequence according to another embodiment of the present invention.

In FIG. 7, it is assumed that the unit generating unit 120 uses a unit type value corresponding to main image data as a unit type value indicating the reference view image data and a unit type value corresponding to sub-image data as a unit type value indicating the additional view image data.

The H.264 NAL unit sequence includes a first NAL unit group 710 and a second NAL unit group 720, and a value of 'nal_unit_type' is shown with parentheses.

In NAL units 711, 712, 713, and 714 in the first NAL unit group 710, the 'nal_unit_type' has a value of 1 or 5.

Referring to FIG. 4, when 'nal_unit_type' has a value of 1, a NAL unit includes image data other than IDR image data, and when 'nal_unit_type' has a value of 5, a NAL unit includes image data which is IDR image data. When the 'nal_unit_type' has a value of 1 or a value of 5, since the main image data is included in a NAL unit, it is determined that the first NAL unit group 710 includes the reference view image data.

In NAL units 721, 722, 723, and 724 in the second NAL unit group 720, the 'nal_unit_type' has a value of 19. Referring to FIG. 4, when 'nal_unit_type' has a value of 19, since the sub-image data is included in a NAL unit, it is determined that the second NAL unit group 720 includes the additional view image data.

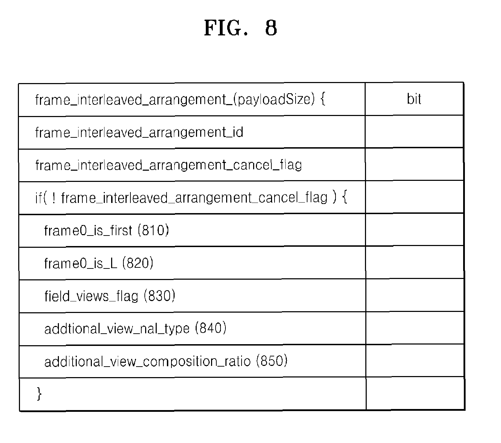

FIG. 8 is a diagram illustrating signaling information according to an embodiment of the present invention.

In FIG. 8, signaling information indicating composition information between the reference view image data and the additional view image data (for example, pairing information between the reference view image data and the additional view image data) is newly defined, and unit type information not defined in the legacy device is allocated to the signaling information. Accordingly, the legacy device which may reproduce only a two-dimensional (2D) image does not process the signaling information and discards the signaling information.

Fields used to process 3D image data in the signaling information will be sequentially explained.

'frame0_is_first' 810 indicates whether a frame in which first view image data is included is first transmitted or a frame in which second view image data is included is first transmitted.

'frame0_is_L' 820 indicates whether the frame in which the first view image data is included is left view image data (or the reference view image data) or right view image data (or the additional view image data).

It may be determined whether the left view image data is first transmitted or the right view image data is first transmitted, by referring to the 'frame0_is_first' 810 and the 'frame0_is_L' 820.

'field_view_flag' 830 indicates whether the additional view image data and the reference view image data are in different image frames or are different fields in one image frame.

'additional_view_nal_type' 840 indicates type information of a NAL unit including the additional view image data.

'additional_view_composition_ratio' 850 indicates a composition ratio of the reference view image data and the additional view image data.

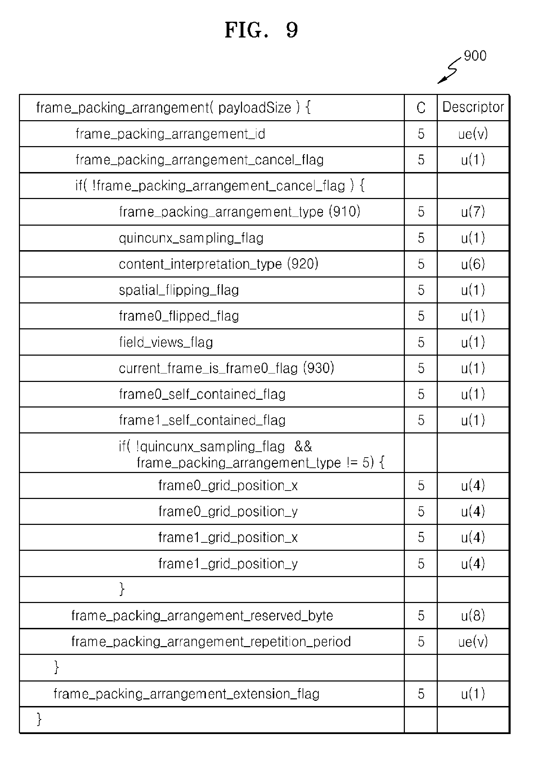

FIG. 9 is a diagram illustrating signaling information 900 according to another embodiment of the present invention.

In FIG. 9, composition information between the reference view image data and the additional view image data is shown with one or more fields in the signaling information 900.

'frame_packing_arrangement_type' 910 indicates a multiplexing method between the reference view image data and the additional view image data. Examples of the multiplexing method according to a value of the 'frame_packing_arrangement_type' 910 are explained in the following Table 1.

**Table 1**

| value | Interpretation |
|---|---|
| 0 | Each component plane of the decoded frames contains a "checkerboard' based on interleaving of corresponding planes of two constituent frames |
| 1 | Each component plane of the decoded frames contains a column based on interleaving of corresponding planes of two constituent frames |
| 2 | Each component plane of the decoded frames contains a row based on interleaving of corresponding planes of two constituent frames |
| 3 | Each component plane of the decoded frames contains a side-by-side packing arrangement of corresponding planes of two constituent frames |
| 4 | Each component plane of the decoded frames contains a top-bottom packing arrangement of corresponding planes of two constituent frames |
| 5 | The component planes of the decoded frames in output order form alternating first and second constituent frames |

Referring to Table 1, when the 'frame_packing_arrangement_type' 910 has a value of 0, the reference view image data and the additional view image data are alternately arranged in a checkerboard fashion to constitute one frame.

When the 'frame_packing_arrangement_type' 910 has a value of 1, the reference view image data and the additional view image data are alternately arranged in columns to constitute one frame.

When the 'frame_packing_arrangement_type' 910 has a value of 2, the reference view image data and the additional view image data are alternately arranged in rows to constitute one frame.

When the 'frame_packing_arrangement_type' 910 has a value of 3, the reference view image data is disposed on a left side of a frame and the additional view image data is disposed on a right side of the frame.

When the 'frame_packing_arrangement_type' 910 has a value of 4, the reference view image data is disposed over a frame and the additional view image data is disposed under the frame.

When the 'frame_packing_arrangement_type' has a value of 5, the reference view image data and the additional view image data constitute different frames.

Since the apparatus100 of FIG. 9 includes the reference view image data and the additional view image data which constitute different frames, the 'frame_packing_arrangement_type' 910 is set to have a value of 5.

'current_frame_is_frame0_flag' 920 indicates whether first view image data is first transmitted or second view image data is first transmitted.

'content_interpretation_type' 930 indicates whether the first view image data is left view image data or right view image data.

The signaling information 900 which is SEI may be transmitted through a NAL unit having 'nal_unit_type' whose value is 6 in FIG. 4.

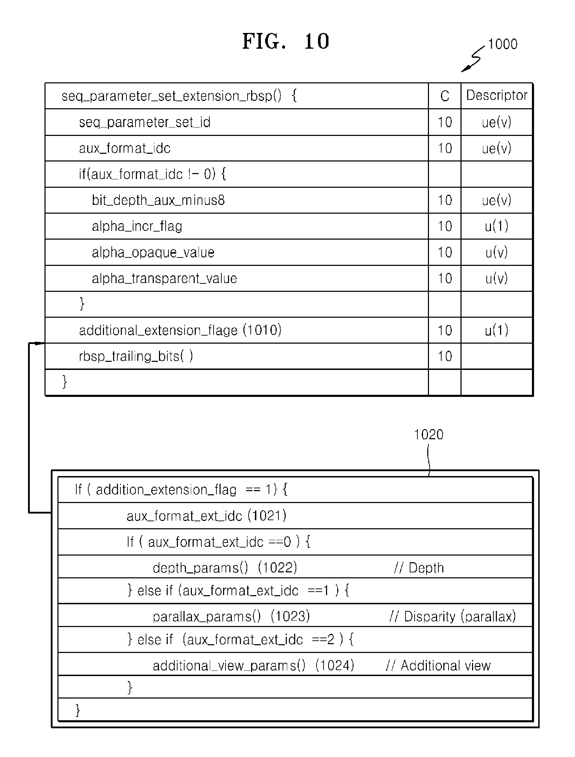

FIG. 10 is a diagram illustrating signaling information according to another embodiment of the present invention.

Referring to FIG. 10, according to the H.264, header information 1000 which is information about sub-image data is included in a NAL unit having nal_unit_type whose value is 13 in FIG. 4 and is transmitted.

The header information 1000 includes 'additional_extension_flag' 1010. When the 'additional_extension_flag' 1010 is set to 1, signaling information 1020 about the additional view image data exists in the header information 1000.

'aux_format_ext_idc' 1021 indicates a type of information included in the sub-image data. When the 'aux_format_ext_idc' 1021 is set to 0, depth information is included in the sub-image data, when the 'aux_format_ext_idc' 1021 is set to 1, binocular disparity information is included in the sub-image data, and when the 'aux_format_ext_idc' 1021 is set to 2, the additional view image data is included in the sub-image data.

When the 'aux_format_ext_idc' 1021 is set to 0, 'depth_params' 1022 is included in the signaling information 1020, when the 'aux_format_ext_idc' 1021 is set to 1, 'parallax_params' 1023 is included in the signaling information 1020, and when the 'aux_format_ext_idc' 1021 is set to 2, 'additional_view_params' 1024 is included in the signaling information 1020.

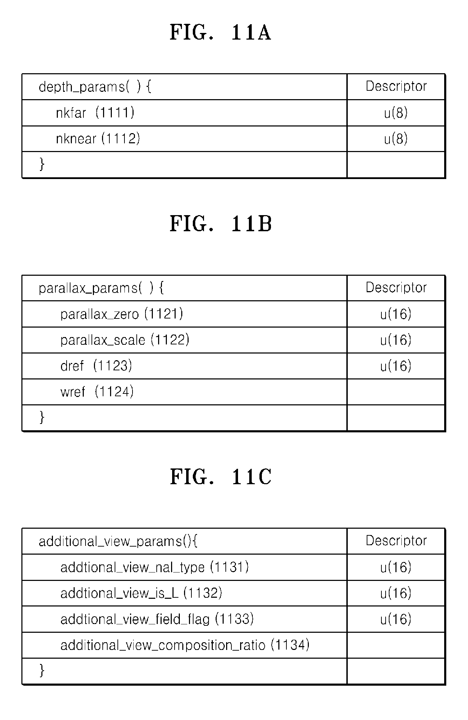

Structures of the 'depth_params' 1022, the 'parallax_params' 1023, and the 'additional_view_params' 1024 will be explained in detail with reference to FIGS. 11A through 11C.

FIG. 11A is a diagram illustrating a structure of the 'depth_params' 1022 of FIG. 10.

FIG. 11B is a diagram illustrating a structure of the 'parallax_params' 1023 of FIG. 10.

The'depth_params' 1022 of FIG. 11A and the 'parallax_params' 1023 of FIG. 11B are the same as those shown in ISO/IEC 23002-3, and thus an explanation thereof will not be given.

FIG. 11C is a diagram illustrating a structure of the 'additional_view_params' 1024 of FIG. 10.

'additional_view_nal_type' 1131 indicates type information of a NAL unit including the additional view image data.

'additional_view_is_L' 1132 indicates whether left view image data is first transmitted or right view image data is first transmitted.

'additional_view_field_flag' 1133 indicates whether the additional view image data and the reference view image data are in different image frames or are different fields in one image frame.

'additional_view_composition_ratio' 1134 indicates a composition ratio of the reference view image data and the additional view image data.

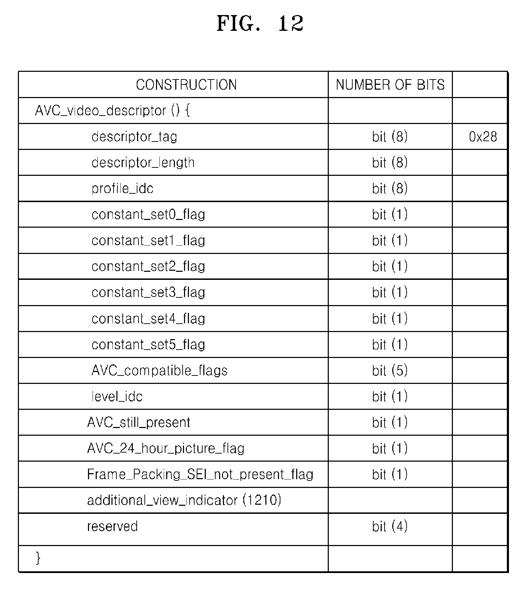

FIG. 12 is a diagram illustrating signaling information according to another embodiment of the present invention.

In FIG. 12, an H.264/AVC image sequence is transmitted by using an MPEG-2 transmission system. Types of a transmission packet in which the reference view image data is contained and a transmission packet in which the additional view image data is contained are designated with an 'audio/video stream' in a PMT. However, signaling information about the additional view image data is provided through 'AVC_video_descriptor()' 1200 in the PMT.

The 'AVC_video_descriptor()' 1200 includes 'additional_view_indicator' 1210.

When the 'additional_view_indicator' 1210 is set to 1, it means that signaling information about the additional view image data is included, and when the 'additional_view_indicator' 1210 is set to 0, it means that signaling information about the additional view image data is not included.

Signaling information about the additional view image data, such as the signaling information 1020 of FIG. 10, may be included in a next column of the 'additional_view_indicator' 1210.

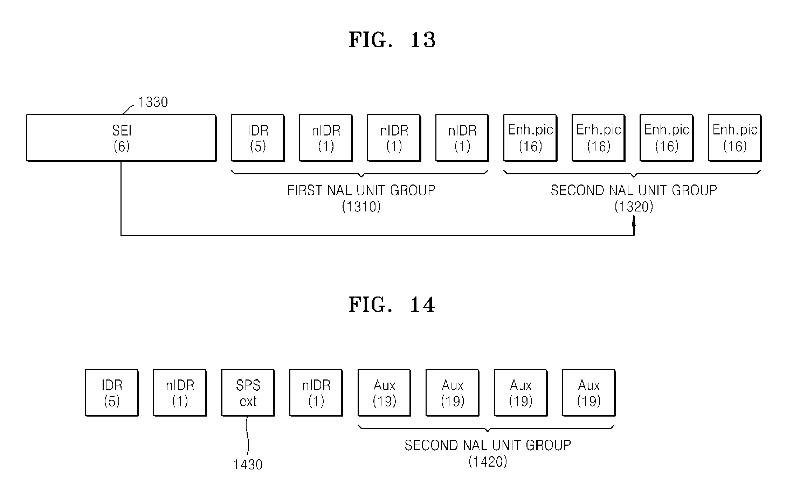

FIG. 13 is a diagram illustrating an H.264 NAL sequence in which signaling information is included, according to an embodiment of the present invention.

SEI 1330 includes signaling information about 3D image data. A value of 'Nal_Unit_Type' of a second NAL unit group 1320 including the additional view image data is included in the signaling information.

In FIG. 13, the 'Nal_Unit_Type' for the second NAL unit group 1320 is set to 16.

An apparatus for decoding data confirms that a value of the 'Nal_Unit_Type' of the second NAL unit group 1320 is 16 by using the SEI 1330, and then obtains a NAL unit having the 'Nal_Unit_Type' whose value is 16.

FIG. 14 is a diagram illustrating an H.264 NAL sequence in which signaling information is included, according to another embodiment of the present invention.

In FIG. 14, the additional view image data is contained in a NAL unit group 1420 in which sub-image data is included, and the signaling information about the additional view image data is transmitted through a NAL unit 1430 in which SPS_extension is included.

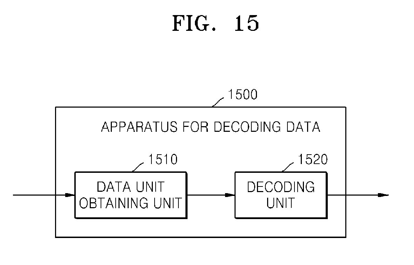

FIG. 15 is a block diagram illustrating an apparatus 1500 for decoding data, according to an embodiment of the present invention.

Referring to FIG. 15, the apparatus 1500 includes a data unit obtaining unit 1510 and a decoding unit 1520.

The data unit obtaining unit 1510 obtains a data unit that includes a header area and a data area. Type information indicating a type of data included in the data area is included in the header area. In particular, the data unit obtaining unit 1510 obtains a first data unit including the reference view image data based on first unit type information from among pieces of type information defined in the legacy device, and a second data unit including the additional view image data based on second unit type information from among pieces of type information not defined in the legacy device. If necessary, data (for example, depth information or binocular disparity information) for obtaining the additional view image data instead of the additional view image data may be included in the second data unit.

The data unit obtaining unit 1510 may further include a third data unit in which signaling information is included. The signaling information includes information about the second unit type information indicating a data unit including the additional view image data, preceding view information indicating image data to be output from among the reference view image data and the additional view image data, multiplex information indicating a multiplexing method of the reference view image data and the additional view image data, and pairing information indicating that the reference view image data and the additional view image data are one pair of image data such as composition ratio information indicating a composition ratio of the reference view image data and the additional view image data.

The decoding unit 1520 decodes the first data unit and the second data unit.

When the legacy device obtains the second data unit, the legacy device may not know the meaning of the second unit type information. For example, the second unit type information may correspond to a reserved value. The legacy device may not decode and may discard the second data unit, and may process only the first data unit and provide 2D image data. However, since the apparatus 1500 of FIG. 15 knows that the additional view image data is included in the second data unit including the second unit type information, the apparatus 1500 may process both the first data unit and the second data unit and provide 3D image data.

The decoding unit 1520 decodes the reference view image data included in the first data unit by referring to only previously decoded reference view image data, and decodes the additional view image data included in the second data unit by referring to only previously decoded additional view image data. Since the reference view image data and the additional view image data may be decoded without referring to each other, the reference view image data or the additional view image data may be selectively decoded, if necessary.

The decoding unit 1520 may decode the first data unit and the second data unit by using the signaling information indicating composition information of the reference view image data and the additional view image data.

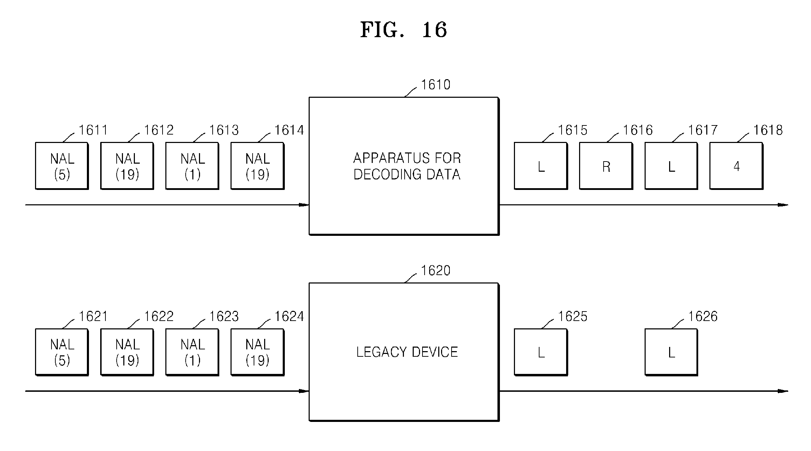

FIG. 16 is a diagram illustrating processes of processing data in an apparatus 1610 for decoding data and a legacy device 1620, according to an embodiment of the present invention.

In FIG. 16, a value of 'Nal_Unit_Type' of a NAL unit including the reference view image data is set to one of 1 through 5, and a value of 'Nal_Unit_Type' of a NAL unit including the additional view image data is set to 16 which is one of reserved values.

Accordingly, NAL units 1611 and 1613 include the reference view image data, and NAL units 1612 and 1614 include the additional view image data.

The apparatus 1610 processes both the NAL units 1611 and 1613 in which the reference view image data is included and the NAL units 1612 and 1614 in which the additional view image data is included and provides a 3D image.

However, the legacy device 1620 processes only the NAL units 1611 and 1613 in which the reference view image data is included, and discards the NAL units 1612 and 1614 in which the additional view image data is included. Accordingly, the legacy device 1620 outputs only 2D image data.

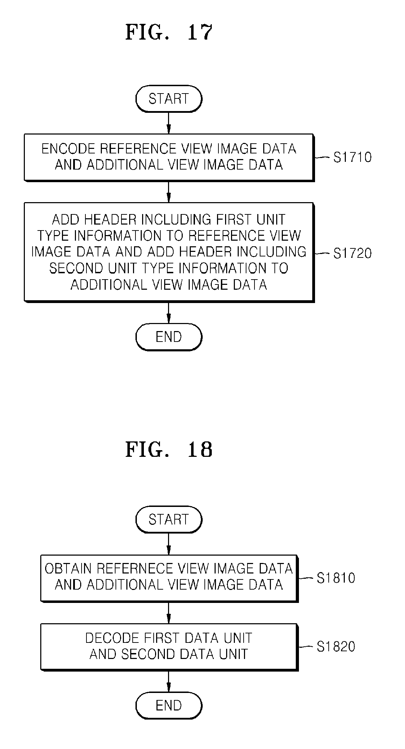

FIG. 17 is a flowchart illustrating a method of encoding data, according to an embodiment of the present invention.

In operation S1710, reference view image data and additional view image data for providing a 3D image are encoded.

In operation S1720, a first data unit in which the reference view image data is included and a second data unit in which the additional view image data is included are generated. First unit type information indicating that the reference view image data is included in the first data unit is included in a header of the first data unit, and second unit type information indicating that the additional view image data is included in the second data unit is included in a header of the second data unit.

One of pieces of unit type information defined in a legacy device and indicating image data may be designated as the first unit type information, and one of pieces of unit type information not defined in the legacy device may be designated as the second unit type information.

Alternatively, unit type information indicating main image data may be designated as the first unit type information, and unit type information indicating sub-image data may be designated as the second unit type information.

FIG. 18 is a flowchart illustrating a method of decoding data, according to an embodiment of the present invention.

In operation S1810, a first data unit in which reference view image data is included and a second data unit in which additional view image data is included are obtained.

In operation S1820, the first data unit and the second data unit are decoded to provide a 3D image.

The above-described embodiments of the present invention may be implemented as an executable program, and may be executed by a general-purpose digital computer that runs the program by using a computer-readable recording medium.

The present invention may be embodied in a general purpose digital computer by running a program from a computer-readable medium. Examples of the computer-readable medium include storage media such as magnetic storage media (e.g., read only memories (ROMs), floppy discs, or hard discs), optically readable media (e.g., compact disk-read only memories (CD-ROMs), or digital versatile disks (DVDs)), etc.

While this invention has been particularly shown and described with reference to exemplary embodiments thereof, it will be understood by those of ordinary skill in the art that various changes in form and details may be made therein without departing from the spirit and scope of the invention as defined by the appended claims. The exemplary embodiments should be considered in a descriptive sense only and not for purposes of limitation. Therefore, the scope of the invention is defined not by the detailed description of the invention but by the appended claims, and all differences within the scope will be construed as being included in the present invention.

## Claims

1. A method of encoding three-dimensional (3D) image data by using a data unit that comprises a header area and a data area, wherein type information indicating a type of data included in the data area is included in the header area, the method comprising:
encoding reference view image data and additional view image data for providing a 3D image;
generating a first data unit by adding to the reference view image data a header including first unit type information from among pieces of type information defined in a legacy device; and
generating a second data unit by adding to the additional view image data a header including second unit type information from among pieces of type information not defined in the legacy device.

2. The method of claim 1, further comprising:
changing the first data unit and the second data unit based on a transmission system; and
transmitting the first data unit and the second data unit.

3. The method of claim 2, wherein the encoding comprises:
encoding next reference view image data by referring to only previous reference view image data; and
encoding next additional view image data by referring to only previous additional view image data.

4. The method of claim 1, wherein each of the first data unit and the second data unit comprises a network abstraction layer (NAL) unit according to H.264.

5. The method of claim 2, further comprising generating signaling information in which pairing information indicating that the reference view image data included in the first data unit and the additional view image data included in the second data unit are one pair of image data is included,
wherein the transmitting comprises transmitting the first data unit, the second data unit, and the signaling information.

6. The method of claim 5, wherein the signaling information comprises information indicating that type information of the second data unit including the additional view image data is the second unit type information.

7. The method of claim 5, wherein the signaling information comprises preceding view information indicating image data to be first output from among the reference view image data and the additional view image data, multiplex information indicating a multiplexing method of the reference view image data and the additional view image data, and composition ratio information indicating a composition ratio of the reference view image data and the additional view image data.

8. The method of claim 6, wherein the transmitting comprises transmitting the first data unit and the second data unit through a moving picture experts group-2 (MPEG-2) transmission system,
wherein the signaling information is included in a predetermined area in a program mapping table (PMT).

9. A method of encoding three-dimensional (3D) image data by using a data unit that comprises a header area and a data area, wherein type information indicating a type of data included in the data area is included in the header area, the method comprising:
encoding at least one of reference view image data and additional view image data for providing a 3D image;
generating a first data unit by adding to the reference view image data a header in which first unit type information indicating that main image data exists in the data area is included; and
generating a second data unit by adding to information about the additional view image data a header in which second unit type information indicating that sub-image data exists in the data area is included.

10. The method of claim 9, wherein the information about the additional view image data is one of depth map information indicating a distance between a reference position and an object, binocular disparity information regarding binocular disparity between a left eye and a right eye, and the additional view image data.

11. A method of decoding three-dimensional (3D) image data in a decoding device by using a data unit that comprises a header area and a data area, wherein type information indicating a type of data included in the data area is included in the header area, the method comprising:
based on first unit type information from among pieces of type information defined in a legacy device, obtaining a first data unit that comprises reference view image data and a header including the first unit type information;
based on a second unit type information from among pieces of type information not defined in the legacy device, obtaining a second data unit that comprises additional view image data and a header including the second unit type information; and
decoding at least one of the first data unit and the second data unit.

12. The method of claim 11, wherein the decoding further comprises, when the decoding device corresponds to the legacy device, discarding the second data unit.

13. The method of claim 11, wherein the decoding comprises:
decoding the reference view image data included in the first data unit by referring to only previously decoded reference view image data; and
decoding the additional view image data included in the second data unit by referring to only previously decoded additional view image data.

14. The method of claim 11, wherein the data unit comprises a network abstraction layer (NAL) unit according to H.264.

15. The method of claim 12, further comprising receiving signaling information in which pairing information indicating that the first data unit and the second data unit are one pair of image data is included,
wherein the decoding comprises decoding the first data unit and the second data unit based on the signaling information.

16. The method of claim 15, wherein the signaling information comprises information indicating that the second unit type information is allocated to the second data unit.

17. The method of claim 15, wherein the signaling information further comprises preceding view information indicating image data to be first output from among the reference view image data and the additional view image data, multiplex information indicating a multiplexing method of the reference view image data and the additional view image data, and composition ratio information indicating a composition ratio of the reference view image data and the additional view image data.

18. The method of claim 17, further comprising receiving the first data unit and the second data unit through a moving picture experts group (MPEG-2) transmission system,
wherein the signaling information is included in a predetermined area in a program mapping table (PMT).

19. A method of decoding three-dimensional (3D) image data by using a data unit that comprises a header area and a data area, wherein type information indicating a type of data included in the data area is included in the header area, the method comprising:
based on first unit type information indicating that data included in the data area in the data unit is main image data, obtaining a first data unit that comprises reference view image data and a header including the first unit type information;
based on second unit type information indicating that data included in the data area in the data unit is sub-image data, generating a second data unit that comprises additional view image data and a header including the second unit type information; and
decoding the first data unit and the second data unit.

20. The method of claim 19, wherein information about the additional view image data is one of depth map information, binocular disparity information, and the additional view image data.

21. An apparatus for encoding three-dimensional (3D) image data by using a data unit that comprises a header area and a data area, wherein type information indicating a type of data included in the data area is included in the header area, the apparatus comprising:
an encoding unit that encodes reference view image data and additional view image data for providing a 3D image; and
a unit generating unit that generates a first data unit by adding to the reference view image data a header including first unit type information from among pieces of type information defined in a legacy device, and generates a second data unit by adding to the additional view image data a header including second unit type information from among pieces of type information not defined in the legacy device.

22. An apparatus for providing three-dimensional (3D) image data by using a data unit that comprises a header area and a data area, wherein type information indicating a type of data included in the data area is included in the header area, the apparatus comprising:
an encoding unit that encodes at least one of reference view image data and additional view image data for providing a 3D image; and
a unit generating unit that generates a first data unit by adding to the reference view image data a header in which first unit type information indicating that main image data exists in the data area is included, and generates a second data unit by adding to the additional view image data a header in which second unit type information indicating that sub-image data exists in the data area is included.

23. An apparatus for decoding data in a decoding device by using a data unit that comprises a header area and a data area, wherein type information indicating a type of data included in the data area is included in the header area, the apparatus comprising:
a unit obtaining unit that, based on first unit type information from among pieces of type information defined in a legacy device, obtains a first data unit that comprises reference view image data and a header including the first unit type information, and based on second unit type information from among pieces of type information not defined in the legacy device, obtains a second data unit that comprises additional view image data and a header including the second unit type information; and
a decoding unit that decodes at least one of the first data unit and the second data unit.

24. An apparatus for decoding three-dimensional (3D) image data by using a data unit that comprises a header area and a data area, wherein type information indicating a type of data included in the data area is included in the header area, the apparatus comprising:
a unit obtaining unit that based on first unit type information indicating that data included in the data area in the data unit is main image data, obtains a first data unit that comprises reference view image data and a header including the first unit type information, and based on second unit type information indicating that data included in the data area in the data unit is sub-image data, obtains a second data unit that comprises additional view image data and a header including the second unit type information; and
a decoding unit that decodes the first data unit and the second data unit.

25. A computer-readable recording medium having embodied thereon a program for executing the method of any of claims 1 through 20.
